# FASCICULE DE BREVET EUROPEEN

(11) **EP 1 878 894 B1**
(45) Date de publication et mention de la délivrance du brevet: **22.09.2010**
(21) Numéro de dépôt: 07111835.0
(22) Date de dépôt: 05.07.2007
(51) Int. Cl.: F02C 7/06, F01D 25/18, B01D 45/08

(54) **Procédé de traitement des rejets d'huiles dans un moteur à turbine à gaz**
Aufbereitungsverfahren für Ölrückstände in einem Gasturbinenmotor
Method of treating oil waste from a gas turbine engine

(30) Priorité: 07.07.2006 FR 0652860
(43) Date de publication de la demande: 16.01.2008
(73) Titulaire: SNECMA, 75015 Paris (FR)
(72) Inventeur: Gauthier, Gérard, Philippe, 77430 Champagne sur Seine (FR); Mourlan, Jean-Pierre, 94130 Nogent sur Marne (FR)
(74) Mandataire: David, Daniel

(56) Documents cités:
- DE-A1- 4 119 794
- GB-A- 306 899
- GB-A- 848 864
- GB-A- 1 293 811
- GB-A- 2 374 026
- US-A- 3 528 241

## Description

La présente invention concerne le domaine des moteurs à turbine à gaz aéronautiques et vise plus particulièrement un procédé de traitement des rejets d'huile de lubrification des paliers.

Un moteur à turbine à gaz est composé fondamentalement d'un ensemble de compression d'air qui alimente une chambre de combustion dans laquelle l'air est mélangé à un carburant pour produire des gaz chauds dont l'énergie est récupérée dans un ensemble de turbine entraînant les moyens de compression. Les arbres reliant les différents corps de rotor sont supportés dans les parties statoriques par des paliers montés dans une enceinte pressurisée. Les enceintes permettent de contenir l'huile qui est injectée au niveau des roulements pour en assurer la lubrification et comprennent des organes d'étanchéité, de type à labyrinthes le plus souvent, parcourus par de l'air de confinement. Cet air se charge de particules d'huiles et afin de maintenir la consommation en huile à un niveau aussi faible que possible, il est connu d'utiliser des équipements de déshuilage qui séparent l'huile de l'air ayant circulé dans les enceintes de roulements. Dans les moteurs actuels, cet équipement est intégré soit à l'intérieur du moteur à proximité des paliers eux mêmes, soit au niveau du boîtier d'entraînement des accessoires, désigné aussi AGB. Les déshuileurs n'ont cependant pas une efficacité de 100%. L'air évacué après son passage dans les déshuileurs contient encore des résidus d'huile sous la forme de gouttelettes qui sont rejetées dans l'atmosphère. Elles sont donc la source de pollution et nuisent à l'environnement.

Le déposant s'est fixé comme objectif de réduire l'effet polluant des rejets d'huile dans l'atmosphère.

Conformément à l'invention, le déposant a mis au point un procédé de traitement d'un flux d'air, chargé de particules d'huile, circulant dans un tube en communication avec une enceinte de roulements d'un moteur à turbine à gaz, caractérisé par le fait que l'on fait passer ledit flux d'air dans une boîte de cokéfaction associée à un moyen de chauffage, dans laquelle l'air est chauffé à une température suffisante pour cokéfier les particules d'huile qu'il contient. De préférence, on recueille dans la boîte de cokéfaction les résidus solides produits de la cokéfaction.

Ainsi la transformation par cokéfaction de l'huile en résidus gazeux et solides permet de réduire la nocivité des gaz rejetés dans l'atmosphère.

D'une part la cokéfaction permet de réduire le volume des rejets d'huile, d'autre part les résidus sont moins nocifs en eux-mêmes.

On connaît le document GB 2 374 026 selon lequel on fait passer le flux dans une boîte dans laquelle l'air est chauffé à une température suffisante pour vaporiser les particules d'huile contenues dans le flux d'air. Cependant les particules d'huile sont chauffées dans le but de rendre les émissions dans l'atmosphère invisible et non de réduire leur nocivité. Il n'y a pas la transformation chimique de la cokéfaction.

Conformément à un mode de mise en oeuvre du procédé on fixe la boîte sur ledit tube de manière que l'air passe du tube dans la boîte. Plus particulièrement dans un moteur à turbine à gaz comportant un cône d'éjection en aval de la turbine, on dispose la boîte dans ledit cône de manière à ce qu'elle soit chauffée par les gaz dans le cône d'éjection.

Conformément à un mode de réalisation préféré on chauffe l'air à une température suffisante pour pyrolyser les particules d'huiles notamment par prélèvement de gaz chauds immédiatement en aval de la turbine.

Une boîte de cokéfaction pour le traitement d'un flux d'air contenant des particules d'huile circulant dans un tube communiquant avec une enceinte de roulements d'un moteur à turbine à gaz, comprend une boîtier cylindrique avec une ouverture d'un côté pour recevoir le flux d'air depuis le tube et des moyens formant chicanes. De préférence la boîte comprend un moyen pour recueillir l'huile cokéfiée et plus particulièrement le boîtier comprend un moyen de fixation en bout du tube central de ventilation du moteur et une grille interne à travers laquelle les particules d'huile sont projetées sur la paroi interne du boîtier et formant moyen pour recueillir l'huile cokéfiée.

L'invention porte également sur un moteur à turbine à gaz comprenant un tube central de ventilation et un cône d'éjection des gaz, ledit tube débouchant dans le canal d'éjection, caractérisé par le fait que la boîte de cokéfaction est montée sur le tube central de manière à être chauffée par les gaz moteur du canal d'éjection.

De préférence, la dite boîte de cokéfaction est chauffée par des gaz prélevés en aval de la turbine à une température suffisante pour pyrolyser les particules d'huile. Par exemple la boîte de cokéfaction est disposée sur le tube central de ventilation à proximité d'une prise de prélèvement de gaz immédiatement en aval de la turbine là où la température est de l'ordre de 500°C. Cette solution est intéressante dans la mesure où elle conduit à l'élimination de tout résidu solide. Dans ce cas il n'est donc plus nécessaire d'intervenir de façon répétée sur la boîte de cokéfaction.

Selon un autre mode de réalisation pour un moteur à turbine à gaz comportant un boîtier AGB à engrenages d'entraînement des accessoires ladite boîte est montée sur ledit boîtier AGB.

On décrit maintenant plus en détail un mode de réalisation de l'invention en référence aux dessins sur lesquels
La figure 1 représente un moteur à turbine à gaz auquel s'applique l'invention,
la figure 2 montre la partie arrière d'un moteur avec un tube central de ventilation équipé d'une boîte de cokéfaction de l'invention,
la figure 3 montre plus en détail une boîte de cokéfaction conforme à l'invention,
la figure 4 montre un moyen de chauffage de la boîte de cokéfaction selon l'invention.

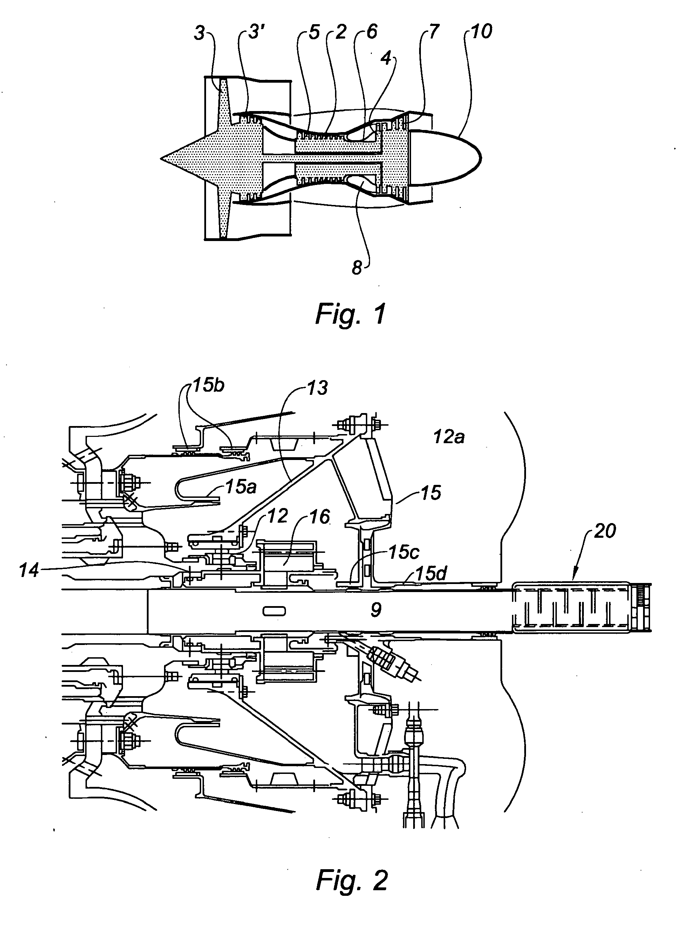

Le moteur à turbine à gaz de la figure 1 est un turboréacteur à turbosoufflante. Un tel moteur comprend, dans cet exemple, un corps haute pression avec un compresseur HP 2 entraîné par une turbine HP 4 montés tous les deux sur un même arbre 6. Un arbre 5 concentrique à l'arbre 6 relie une soufflante amont 3, associée à un compresseur basse pression 3'BP, à une turbine basse pression BP 7 en aval de la turbine HP 4. L'air comprimé par les compresseurs 3' puis 2 passe dans une chambre de combustion annulaire 8 où il est mélangé au carburant pour produire des gaz de combustion. Ceux-ci sont guidés vers la turbine HP4 puis BP7 et enfin évacués par la tuyère aval comprenant un cône d'éjection. La force de propulsion est fournie en majeure partie pour ce type de moteur par le flux d'air bipassant la chambre de combustion et évacué soit directement dans l'atmosphère par une tuyère annulaire soit mélangé aux gaz issus de turbine et constituant le flux primaire. Les arbres sont supportés par des paliers interarbres pour les parties tournantes concentriques et par des paliers montés sur les structures fixes, statoriques, pour l'arbre 5.

Les paliers, en raison des températures sont lubrifiés et refroidis en permanence par de l'huile qui est confinée dans une enceinte dite enceinte de roulements. De l'air sous pression est introduit au niveau des joints d'étanchéité pour former une barrière et empêcher que de l'huile ne passe vers les parties chaudes du moteur et ne provoque un incendie. Après son passage dans un déshuileur de récupération de l'huile, l'air de confinement est usuellement évacué vers l'atmosphère par le tube central de ventilation 9. C'est le cas lorsque les déshuileur sont disposés à proximité des enceintes de palier. Dans la suite de la description, l'invention est appliquée à ce cas mais elle vaut aussi pour le cas ou les déshuileurs sont disposés sur le boîtier AGB.

L'air canalisé par le tube 9 est évacué en aval par un conduit central disposé dans la pièce tronconique 10 ou sensiblement tronconique, définissant la surface interne de la veine des gaz issus des étages de turbine. On la désigne cône d'éjection, Dans les solutions de l'art antérieur, l'huile résiduelle, même en faible quantité, est envoyée dans l'atmosphère à travers le cône d'éjection.

Conformément à l'invention, on élimine toute huile résiduelle dans l'air avant le rejet de celui-ci dans l'atmosphère en la piégeant et en l'oxydant pour la transformer en espèces gazeuses et en coke de nocivité plus faible que l'huile.

Un moyen pour y parvenir est illustré sur la figure 2 qui montre plus en détail la partie arrière d'un moteur tel que celui de la figure 1. On distingue le palier arrière 12 supportant le tourillon 14 de la turbine BP. Les roulements 12a du palier 12 sont montés dans une cage disposée entre le support de palier 13 fixe et le tourillon 14. l'ensemble est contenu dans une enceinte 15. Des joints d'étanchéité à labyrinthes 15a, 15b sont ménagés entre la structure fixe de l'enceinte et le disque du rotor BP. Des joint à labyrinthes 15c et 15d sont ménagés également entre la structure fixe et le tube central de ventilation qui est solidaire de l'arbre BP. L'air de l'enceinte est prélevé par le déshuileur 16 puis est évacué centralement par le tube 9. Les éléments que l'on vient de décrire ne font pas partie de l'invention et sont en soi connus.

L'air du tube 9 est entraîné vers l'aval à l'intérieur du cône d'éjection puis est mélangé aux gaz moteur.

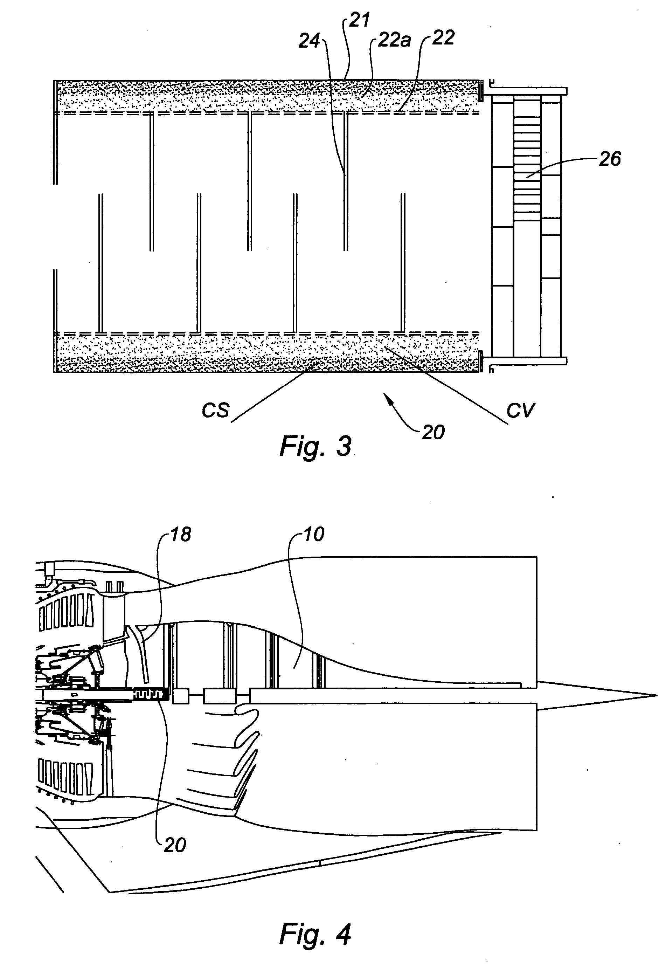

On a conformément à l'invention disposé une boîte, que l'on désignera par la suite boîte de cokéfaction 20, sur l'extrémité aval du tube central de ventilation 9. Cette boîte est montrée en détail sur la figure 3.

Elle comprend un boîtier cylindrique 21 de diamètre légèrement supérieur à celui du tube 9. Le boîtier est fixé en bout du tube par tout moyen amovible approprié. Il est monté ouvert sur le tube. A l'intérieur du boîtier une grille cylindrique 22 ménage un espace annulaire 22a avec le boîtier. Sur la longueur du boîtier 21, des plaques transversales 24 régulièrement espacées sont fixées dans le volume délimité par la grille 22, de manière alternée en forme de chicanes. Le boîtier est fermé en aval par une grille avec des trous axiaux et définissant un arrête-flammes 26. Le boîtier 21 est ainsi monté en aval sur le tube 9 de manière à en recueillir l'air qui le parcourt. Cet air est forcé à l'intérieur du boîtier par les plaques 24 dans un parcours alternativement radialement vers l'extérieur et radialement vers l'intérieur. Il s'ensuit que les particules d'huile qu'il contient sont centrifugées à travers la grille 22. Elles sont recueillies dans l'espace annulaire 22a. Par sa disposition en extrémité du tube 9, le boîtier est chauffé par les gaz ambiants à l'intérieur du cône d'éjection qui maintiennent ainsi, en fonctionnement du moteur, la paroi du boîtier 21 à une température d'environ 300°C. A cette température, l'huile dans l'espace 22a subit une transformation thermique d'oxydation. Elle se transforme en partie en huile cokéfiée en phase vapeur CV et en partie en coke CS, résidu solide.

Un moyen d'éliminer le résidu solide est de démonter la boîte et de la changer. C'est une opération qui est effectuée aisément au sol pendant les opérations de maintenance du moteur sous l'aile de l'avion. Selon un mode de réalisation plus avantageux économiquement, la boîte peut être réalisée sous la forme d'une cartouche amovible et remplaçable. Toutefois il faut aussi tenir compte que dans certaines conditions de fonctionnement du turboréacteur ou en cas de panne (consommation d'huile excessive) la quantité de coke formée peut ne pas être négligeable. Cela implique soit des interventions relativement fréquentes ou imprévues, pénalisantes pour la rentabilité, soit une augmentation du volume de la boîte résultant en un encombrement et une masse tout aussi pénalisantes.

Un moyen avantageux d'éliminer le résidu solide plus rapidement est de le pyrolyser au fur et à mesure de sa formation en le portant à haute température. En effet au dessus de 500°C le coke est brûlé sans laisser aucun résidu. Ainsi selon un mode de réalisation particulier, le dispositif comprend un moyen de chauffage de la boîte jusqu'à 500°C. On a représenté sur la figure 4, un montage de la boîte à l'intérieur du cône d'échappement comme dans le cas précédent mais en ajoutant un tube 18 pour amener une quantité déterminée de gaz de la veine du flux primaire sur les parois de la boîte.

## Revendications

1. Procédé de traitement d'un flux d'air, chargé de particules d'huile, circulant dans un tube (9) communiquant avec une enceinte de roulements d'un moteur à turbine à gaz, **caractérisé par le fait que** l'on fait passer ledit flux d'air dans une boîte de cokéfaction (20) associée à un moyen de chauffage, dans laquelle l'air est chauffé à une température suffisante pour cokéfier les particules d'huile contenues dans le flux d'air.

2. Procédé selon la revendication précédente selon lequel on recueille dans la boîte de cokéfaction (20) les résidus solides produits de la cokéfaction.

3. Procédé selon l'une des revendications précédentes selon lequel on fixe ladite boîte (20) sur ledit tube (9) de manière que le flux d'air passe du tube dans la boîte.

4. Procédé selon la revendication précédente, de traitement dudit flux d'air dans un moteur à turbine à gaz comportant un cône d'éjection (10) en aval de la turbine, selon lequel on dispose la boîte dans ledit cône d'éjection (10) de manière à ce qu'elle soit chauffée par les gaz dans le cône d'éjection.

5. Procédé selon la revendication 1 selon lequel on chauffe l'air à une température suffisante pour pyrolyser les particules d'huiles.

6. Procédé selon la revendication 5 selon lequel on chauffe l'air par prélèvement de gaz chauds immédiatement en aval de la turbine.

7. Moteur à turbine à gaz comprenant un tube central de ventilation (9) communiquant avec une enceinte de roulements du moteur et un cône d'éjection (10) des gaz, ledit tube débouchant dans le canal d'éjection **caractérisée par le fait qu'**il comprend une boîte de cokéfaction (20) pour le traitement du flux d'air issu de l'enceinte de roulements qui contient des particules d'huile, la boîte de cokéfaction (20) comprenant un boîtier (21) cylindrique avec une ouverture d'un côté pour recevoir le flux d'air depuis le tube (9) et des moyens (24) formant chicanes, et étant montée sur le tube central (9) de manière à être chauffée par les gaz moteur du cône d'éjection (10).

8. Moteur selon la revendication précédente dont la boîte de cokéfaction comprend un moyen (22) pour recueillir l'huile cokéfiée.

9. Moteur selon la revendication précédente, dont le boîtier (21) comprend un moyen de fixation en bout dudit tube (9) et une grille interne à travers laquelle les particules d'huile sont projetées sur la paroi interne du boîtier et formant moyen pour recueillir l'huile cokéfiée.

10. Moteur selon la revendication 7, .8 ou 9 dont ladite boîte de cokéfaction (20) est chauffée par des gaz prélevés en aval de la turbine à une température suffisante pour pyrolyser les particules d'huile.

11. Moteur à turbine à gaz selon l'une des revendications 7 à 10 comportant un boîtier (AGB) à engrenages d'entraînement des accessoires dont ladite boîte de cokéfaction est montée sur ledit boîtier.

## Claims

1. A method for treating an airflow, laden with oil particles, flowing in a tube (9) communicating with a rolling bearing enclosure of a gas turbine engine, wherein said airflow is made to travel into a coking box (20) associated with a heating means, in which the air is heated to a sufficient temperature to coke the oil particles contained in the airflow.

2. The method as claimed in the preceding claim, wherein the solid residues produced by the coking are collected in the coking box (20).

3. The method as claimed in one of the preceding claims, wherein said box (20) is attached to said tube (9) so that the airflow travels from the tube into the box.

4. The method as claimed in the preceding claim for treating said airflow in a gas turbine engine comprising an exhaust cone (10) downstream of the turbine, wherein the box is placed in said exhaust cone (10) so that it is heated by the gases in the exhaust cone.

5. The method as claimed in claim 1, wherein the air is heated to a sufficient temperature to pyrolize the oil particles.

6. The method as claimed in claim 5, wherein the air is heated by taking hot gases immediately downstream of the turbine.

7. A gas turbine engine comprising a central ventilation tube (9) communicating with a rolling bearing enclosure of the engine and a gas exhaust cone (10), said tube opening into the exhaust channel, wherein it comprises a coking box for the treatment of the airflow originating from the rolling bearing enclosure that contains the oil particles, the coking box (20) comprising a cylindrical casing (21) with an opening on one side to receive the airflow from the tube (9) and a means (24) forming chicanes, and being mounted on the central tube (9) so as to be heated by the engine gases from the exhaust cone (10).

8. The engine as claimed in the preceding claim whose coking box comprises a means (22) for collecting the coked oil.

9. The engine as claimed in the preceding claim, whose casing (21) comprises an attachment means at the end of said tube (9) and an internal grid through which the oil particles are sprayed onto the internal wall of the casing and forming a means for collecting the coked oil.

10. The engine as claimed in claim 7, 8 or 9, wherein said coking box (20) is heated by gases taken downstream of the turbine at a sufficient temperature to pyrolize the oil particles.

11. The gas turbine engine as claimed in one of claims 7 to 10 comprising an accessory gearbox (AGB) wherein said coking box is mounted on said gearbox.

## Patentansprüche

1. Verfahren zum Aufbereiten eines mit Ölpartikeln beladenen Luftstroms, der in einem Rohr (9) umläuft, das mit einem Wälzlagerraum eines Gasturbinentriebwerks in Verbindung steht, **dadurch gekennzeichnet, dass** der Luftstrom durch einen Verkokungsbehälter (20) geführt wird, der mit einem Heizmittel verknüpft ist und in dem die Luft auf eine ausreichende Temperatur erhitzt wird, um die in dem Luftstrom enthaltenen Ölpartikel zu verkoken.

2. Verfahren nach dem vorhergehenden Anspruch, wobei in dem Verkokungsbehälter (20) die Festrückstände aufgefangen werden, die sich aus der Verkokung ergeben.

3. Verfahren nach einem der vorhergehenden Ansprüche, wobei der Behälter (20) auf dem Rohr (9) befestigt wird, so dass der Luftstrom des Rohrs in den Behälter geht.

4. Verfahren nach dem vorhergehenden Anspruch zum Aufbereiten des Luftstroms in einem Gasturbinentriebwerk, das einen Ausstoßkegel (10) stromabwärts von der Turbine umfasst, wobei der Behälter in dem Ausstoßkegel (10) angeordnet ist, so dass er von den Gasen in dem Ausstoßkegel erhitzt wird.

5. Verfahren nach Anspruch 1, wobei die Luft auf eine ausreichende Temperatur erhitzt wird, um die Ölpartikel zu pyrolysieren.

6. Verfahren nach Anspruch 5, wobei die Luft durch Entnahme von heißen Gasen direkt stromabwärts von der Turbine erhitzt wird.

7. Gasturbinentriebwerk, umfassend ein mittiges Lüftungsrohr (9), das mit einem Wälzlagerraum des Triebwerks und einem Gasausstoßkegel (10) in Verbindung steht, wobei das Rohr in den Ausstoßkanal mündet, **dadurch gekennzeichnet, dass** es einen Verkokungsbehälter (20) umfasst für die Aufbereitung des Luftstorms der aus dem Wälzlagerraum kommt und Ölpartikel enthält, wobei der Verkokungsbehälter (20) ein zylindrisches Gehäuse (21) mit einer Öffnung auf einer Seite, um den Luftfluss von dem Rohr (9) zu empfangen, und Prallplatten bildende Mittel (24) umfasst, und wobei der Behälter auf dem mittigen Rohr (9) angebracht ist, um von den Triebwerkgasen des Ausstoßkegels (10) erhitzt zu werden.

8. Triebwerk nach dem vorhergehenden Anspruch, wobei der Verkokungsbehälter ein Mittel (22) umfasst, um das verkokte Öl aufzufangen.

9. Triebwerk nach dem vorhergehenden Anspruch, wobei das Gehäuse (21) ein Mittel zur Befestigung am Ende des Rohrs (9) und ein Innengitter umfasst, durch das die Ölpartikel auf die Innenwand des Gehäuses gespritzt werden und das ein Mittel bildet, um das verkokte Öl aufzufangen.

10. Triebwerk nach Anspruch 7, 8 oder 9, wobei der Verkokungsbehälter (20) von Gasen erhitzt wird, die stromabwärts von der Turbine mit einer ausreichenden Temperatur entnommen werden, um die Ölpartikel zu pyrolysieren.

11. Triebwerk nach einem der Ansprüche 7 bis 10, umfassend ein Hilfsgerätegetriebegehäuse (AGB), dessen Verkokungsbehälter auf dem Gehäuse angebracht ist.
